# DEMANDE DE BREVET EUROPEEN

(11) **EP 1 470 906 A2**
(43) Date de publication de la demande: **27.10.2004**
(21) Numéro de dépôt: 04290883.0
(22) Date de dépôt: 02.04.2004
(51) Int. Cl.: B29C 45/16, A45D 40/00, A45D 33/00, B29C 45/00

(54) **Procédé de moulage par injection à plusieurs composants d'une pièce en matière plastique pigmentée et pièce selon ce procédé**

(30) Priorité: 04.04.2003 FR 0304243
(71) Demandeur: Axilone plastique, 56520 Guidel (FR)
(72) Inventeur: Denece, Jean-Paul, 56870 Baden (FR)
(74) Mandataire: Derambure, Christian

(57) **Abrégé**

L'invention concerne un procédé de réalisation d'une pièce rigide en matière plastique comprenant une distribution d'éléments répartis dans la matière, comprenant une partie de base (19) rigide.

Le procédé comprend les étapes suivantes :
- on injecte de la matière plastique afin de mouler la partie de base (19) comprenant au moins une saillie (23) sur une première face et une deuxième face lisse,
- on injecte la matière plastique afin de mouler une deuxième partie de pièce (20), la deuxième partie (20) ayant une première face complémentaire de la deuxième face de la partie de base (19) et une deuxième formant la face extérieure de la pièce (3) ;
- on associe rigidement la partie de base (19) et la deuxième partie (20), la deuxième face de la partie de base (19) étant au contact de la première face de la deuxième partie (20).

## Description

L'invention concerne un procédé de réalisation d'une pièce comprenant une partie de base rigide en matière plastique comprenant une distribution d'éléments répartis dans la matière et une deuxième partie rigide en matière plastique.

L'invention concerne en outre la pièce formée par la partie de base et la deuxième partie.

Selon un autre aspect, l'invention concerne un conteneur prêt à être rempli comprenant ladite pièce et un corps de base en matière plastique, la pièce et le corps étant articulés l'un à l'autre à l'aide de moyens formant charnière, ainsi que le procédé de réalisation du conteneur prêt à être rempli.

L'invention concerne encore un conteneur contenant un produit notamment cosmétique formé par le conteneur prêt à être rempli comprenant un godet contenant le produit ainsi que le procédé de fabrication d'un conteneur contenant le produit.

Afin de réaliser des produits de conditionnement ou des conteneurs présentant un aspect attrayant, une large gamme de matières plastiques est disponible.

Parmi celles-ci, on trouve les matières plastiques dans lesquelles est ajouté une certaine quantité d'éléments de petites tailles répartis au sein de la matière plastique.

Ces éléments sont par exemple des pigments de couleurs, des éléments réfléchissant la lumière tels que des paillettes ou de la nacre ou encore des billes de petite taille.

Selon l'effet recherché, on peut choisir une densité d'éléments au sein de la matière plastique plus ou moins importante.

Dans le cas où l'on forme la pièce à fabriquer par injection, on injecte la matière plastique pourvue de sa distribution d'éléments dans un moule.

Si la pièce ne comporte aucune saillie vers l'extérieur, la distribution d'éléments est homogène et après refroidissement, la pièce présente un aspect homogène grâce à une bonne répartition des éléments.

Dans le cas où la pièce comporte une ou plusieurs saillie(s), des lignes de champ se forment au sein de la matière autour des saillies. Ces lignes de champ s'étendent de la saillie jusqu'à la face opposée à la face comprenant la saillie. Et les éléments s'orientent alors selon ces lignes de champ.

En conséquence, et dans le cas de paillettes, d'une part, l'orientation de celles-ci ne se fait plus au hasard et d'autre part, la répartition n'est plus homogène. Ainsi la lumière n'est pas reflétée de la même manière dans les zones de face situées au droit des saillies.

En ces zones, la répartition se fait selon les lignes de champ et des zones d'ombre se forment.

Ces inconvénients nuisent à l'aspect esthétique général de la pièce fabriquée.

On connaît déjà des méthodes permettant de masquer ces zones d'ombre. On peut par exemple recouvrir la face touchée par un film plastique thermocollé ou encore peindre la face.

Toutefois, ces techniques ne permettent pas d'obtenir une pièce présentant une apparence homogène sur l'ensemble de ses faces.

L'objet de la présente invention est de remédier à ces inconvénients à l'aide d'un procédé de réalisation d'une pièce en matière plastique conservant un même aspect sur toutes ses faces.

A cet effet, l'invention propose un procédé de réalisation d'une pièce rigide en matière plastique comprenant une distribution d'éléments répartis dans la matière, comprenant une partie de base rigide.

Le procédé comprend les étapes suivantes :
- on injecte de la matière plastique afin de mouler la partie de base comprenant au moins une saillie sur une première face et une deuxième face lisse,
- on injecte la matière plastique afin de mouler une deuxième partie de pièce, la deuxième partie ayant une première face complémentaire de la deuxième face de la partie de base et une deuxième face formant la face extérieure de la pièce ;
- on associe rigidement la partie de base et la deuxième partie, la deuxième face de la partie de base étant au contact de la première face de la deuxième partie

Ainsi la pièce présente visuellement un aspect homogène, toutes les faces étant réalisées dans la même matière plastique sans qu'il soit nécessaire d'avoir recours à un masquage à l'aide de peinture, d'un film thermocollable ou analogue.

Selon un mode de réalisation, le procédé peut comprendre les étapes suivantes :
- on moule la deuxième partie dans une première cavité dont la forme correspondant à celle de la deuxième partie ;
- on place la deuxième partie dans une deuxième cavité dont la forme correspond à celle de la pièce ; et
- on surmoule la partie de base sur la deuxième partie.

Selon un autre mode de réalisation, le procédé peut comprendre les étapes suivantes :
- on injecte de la matière plastique dans un moule par l'intermédiaire d'un premier point d'injection afin de mouler la partie de base, la forme de la deuxième face de la partie de base étant obtenue grâce à une partie de moule mobile, la partie de moule mobile étant déplaçable selon une direction entre deux positions, une première position de moulage de la partie de base et une deuxième position de moulage de la deuxième partie ;
- on déplace la partie de moule mobile de sa première position à sa deuxième position en l'écartant de la deuxième face de la partie de base pour créer un espace vide ;
- on injecte de la matière plastique par l'intermédiaire d'un deuxième point d'injection dans l'espace vide afin d'obtenir la deuxième partie.

Un trou traversant peut être ménagé, dans la partie de base lors du moulage de la partie de base, la matière plastique étant injectée dans l'espace vide au travers du trou traversant.

En variante, le deuxième point d'injection peut être agencé latéralement par rapport l'espace vide.

Le procédé peut comprendre en outre les étapes consistant à :
- retirer la pièce formée par la partie de base et la deuxième partie;
- déplacer la partie de moule mobile de sa deuxième position à sa première position.

L'invention concerne également une pièce, notamment de conteneur destiné à contenir un produit cosmétique, en matière plastique comprenant une distribution d'éléments répartis dans la matière comprenant une partie de base comprenant au moins une saillie sur une première face et une deuxième face lisse, la pièce comprenant une deuxième partie, la deuxième partie ayant une première face complémentaire de la deuxième face de la partie de base et une deuxième face formant la face extérieure de la pièce, la partie de base et la deuxième partie étant rigidement fixées l'une à l'autre, la deuxième face de la partie de base étant au contact de la première face de la deuxième partie.

L'invention concerne en outre un conteneur prêt à être rempli d'un produit notamment cosmétique.

Le conteneur comprend au moins :
- un corps de base comprenant sur une face intérieure un godet destiné à être rempli de produit cosmétique ;
- une pièce articulée au corps de base par des moyens formant charnière le long d'un côté commun, la pièce étant mobile par rapport au corps de base entre deux positions, une position de fermeture dans laquelle la pièce recouvre la face intérieure du corps de base et une position d'ouverture dans laquelle la pièce et le corps ont une zone de contact limitée aux moyens formant charnière et dans laquelle le godet est accessible,
la pièce étant conforme à la pièce décrite précédemment.

L'invention concerne encore un procédé de fabrication d'un conteneur prêt à être rempli tel que précédemment décrit.

Le procédé comprend les étapes suivantes :
- on se procure une pièce telle que précédemment décrite ;
- on se procure un corps de base comprenant sur une face intérieure un godet destiné à être rempli de produit cosmétique ;
- on associe la pièce et le corps de base à l'aide de moyens formant charnière le long d'un côté commun de la pièce et du corps de base.

L'invention concerne encore un conteneur pour un produit notamment cosmétique comprenant au moins un corps de base rempli de produit et une pièce articulée au corps de base par des moyens formant charnière le long d'un côté commun, la pièce étant mobile par rapport au corps de base entre deux positions, une position de fermeture dans laquelle la pièce recouvre la face intérieure du corps de base et une position d'ouverture dans laquelle la pièce et le corps ont une zone de contact limitée aux moyens formant charnière et dans laquelle le godet est accessible, la pièce étant conforme à la pièce décrite précédemment et le godet étant rempli de produit notamment cosmétique.

L'invention concerne encore le procédé de fabrication du conteneur contenant un produit cosmétique précédemment décrit et comprenant les étapes suivantes :
- on se procure un conteneur prêt à être rempli ;
- on coule le produit cosmétique dans le godet ;
- on place la pièce de conteneur dans sa position de fermeture.

D'autres particularités de l'invention résulteront de la description qui va suivre, en référence aux dessins annexés, donnés à titre d'exemples non limitatifs.

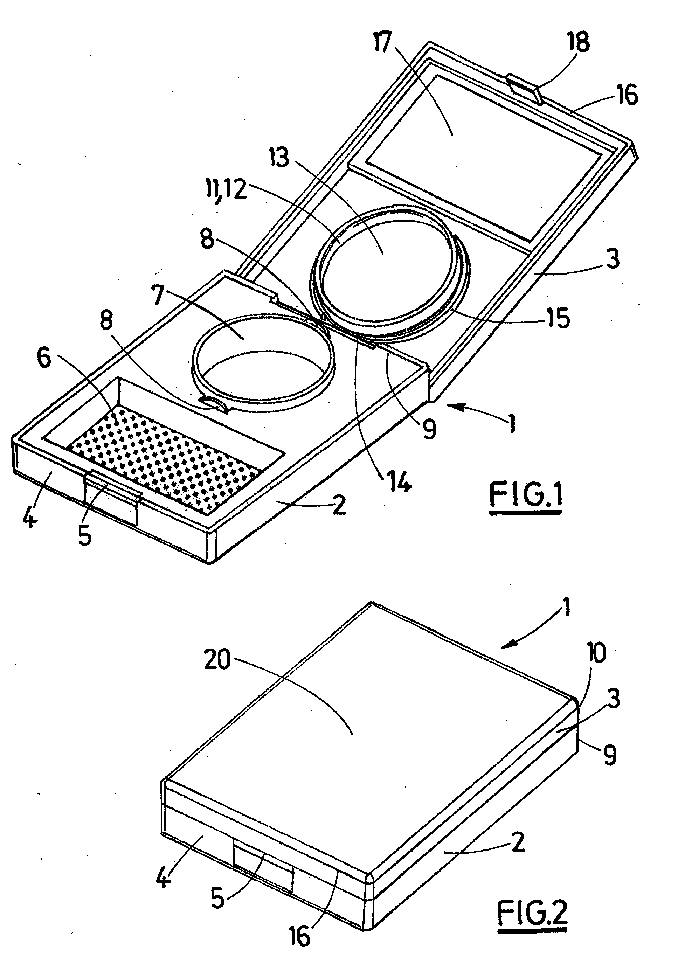

La figure 1 représente un conteneur de produit cosmétique en matière plastique comprenant une distribution d'éléments répartis dans la matière, fabriqué selon un mode de réalisation de l'invention. Le conteneur, en position ouverte, est représenté selon une vue en perspective.

La figure 2 représente le conteneur de la figure 1, en perspective, en position fermée.

La figure 3 représente une vue en coupe de la pièce, dudit conteneur, comprenant la partie de base et la deuxième partie ; dans le mode de réalisation décrit la pièce est un couvercle de conteneur.

Les figures 4, 5 et 6 représentent, selon une vue en coupe, les différentes étapes du procédé de fabrication de la pièce formée de la partie de base et de la deuxième partie selon un premier mode de réalisation.

La figure 7 représente schématiquement une vue en coupe de l'appareillage d'injection de matière plastique en position de moulage de la partie de base, selon un autre mode de réalisation de l'invention.

La figure 8 représente schématiquement une vue en coupe dudit appareillage en position permettant le moulage de la deuxième partie selon le mode de réalisation représenté à la figure 7.

La figure 9 représente schématiquement une vue en coupe de l'appareillage une fois la deuxième partie moulée selon le même mode de réalisation.

La figure 10 représente un conteneur prêt à être rempli selon un autre mode de réalisation de l'invention, en position ouverte, et représenté selon une vue en prespective.

La figure 11 représente une vue en coupe longitudinale du conteneur de la figure 10, en position fermée.

La figure 12 représente une vue agrandie de l'injection de matière plastique permettant le moulage de la deuxième partie du détail B de la figure 11 selon une variante du mode de réalisation représenté sur les figures 7 à 9.

La figure 13 représente une vue agrandie de l'injection de matière plastique permettant le moulage de la deuxième partie du détail A de la figure 11 selon le mode de réalisation représenté sur les figures 7 à 9.

On décrit ici l'invention appliquée à un conteneur pour produit cosmétique. Toutefois, l'invention s'applique également à tout autre produit en matière plastique comprenant une distribution d'éléments répartis dans la matière et pour lequel on souhaite obtenir une surface homogène sans zone d'ombre.

La matière plastique utilisée est un polymère tel que le polypropylène.

Le conteneur 1 comprend un corps de base 2 et un couvercle 3. Le corps de base 2 et le couvercle 3 sont articulés l'un à l'autre à l'aide de moyens formant charnière non représentés.

Le corps de base 2 est en matière plastique rigide et comprend une distribution d'éléments répartis dans la matière. Ces éléments, non représentés, sont des paillettes réfléchissant la lumière. Dans d'autres modes de réalisation non représentés, d'autres types d'éléments peuvent être utilisés ; il est également possible que la matière plastique du corps 2 ne comprennent pas d'éléments.

Le corps 2 est parallélépipédique et présente une épaisseur très inférieure aux largeur et longueur du corps 2. Le corps 2 présente une face extérieure et une face intérieure, rectangulaires.

La face extérieure est pleine.

Lorsque le conteneur 1 est complet, la face intérieure n'est visible qu'en position ouverte du conteneur 1. Les faces intérieure et extérieure sont délimitées par quatre côtés formant les quatre autres faces du parallélépipède.

Sur un premier côté en largeur 4, et sur toute son épaisseur, le corps 2 comprend un fermoir 5 situé sensiblement au milieu du bord 4. Le fermoir 5 comprend une fente située légèrement en retrait du bord 4 et des moyens d'encliquetage d'une langue placée sur le couvercle 3 et destinée à venir s'encliqueter dans la fente à l'aide des moyens d'encliquetage.

Outre le fermoir 5, la face intérieure comprend une ouverture rectangulaire ouvrant sur un évidement rectangulaire 6 s'étendant sur sensiblement toute la largeur du corps 2 et sur une petite moitié de la longueur du corps 2. L'évidement présente quatre parois latérales réalisés d'une pièce avec la face intérieure.

La face intérieure n'est formée, dans cette zone que d'une bande étroite. L'épaisseur de cet évidement 6 est légèrement inférieure à l'épaisseur du corps 2.

En s'éloignant du côté 4, après l'évidement 6, la face intérieure présente une deuxième ouverture, circulaire et destinée à accueillir un godet 7, également circulaire. Le godet 7 est ici amovible.

Le godet 7, en matière plastique rigide présente une paroi périphérique d'une hauteur comparable à celle des bords du corps 2 et faisant légèrement saillie au dessus du niveau de la face intérieure. Des moyens d'encliquetage 8 sont ici prévus afin de fixer de façon amovible le godet 7 au corps 3. Les moyens d'encliquetage sont diamétralement opposés, l'un situé vers le bord 4, l'autre vers le côté 9 opposé au côté 4. Le volume intérieur au godet 7 permet d'accueillir le produit cosmétique (non représenté).

La face intérieure, la face extérieure et les côtés du corps 2 sont réalisés d'une pièce mais peuvent être réalisés en plusieurs pièces.

Le long de son côté 9, le corps 2 est articulé au couvercle 3 à l'aide de moyens d'articulations non représentés.

Le couvercle 3 correspond dans ce mode de réalisation à la pièce revendiquée.

Le couvercle 3 est parallélépipédique et présente une face extérieure et une face intérieure, rectangulaires.

La face extérieure est pleine.

Lorsque le conteneur 1 est complet, la face intérieure n'est visible qu'en position ouverte du conteneur 1. Les faces intérieure et extérieure sont délimitées par quatre côtés formant les quatre autres faces du parallélépipède.

Les dimensions du couvercle 3 (longueur et largeur) correspondent à celle du corps 2. Le couvercle 3 est moins épais que le corps 2.

Le couvercle 3 est en matière plastique rigide comprenant une distribution d'éléments répartis dans la matière.

Le couvercle 3 est articulé au corps 2 selon un côté 10.

La face intérieure comprend deux zones. La première zone située du côté du côté 10 présente un bouchon circulaire 11. Le bouchon 11 comprend une paroi périphérique en saillie 12 dont le diamètre est prévu pour que bouchon 11 encercle la paroi périphérique du godet 7 lorsque que le conteneur 1 est fermé.

Le bouchon 11 est en matière plastique rigide et comprend outre sa paroi périphérique 12 un fond 13 situé sensiblement dans le même plan que la face extérieure du couvercle 3.

Dans le plan du fond 13 du bouchon 11, le bouchon 11 présente un débordement 14 radial par rapport à la paroi périphérique.

Le bouchon 11 est fixé rigidement à la face intérieure à l'aide de moyens de fixation 15.

Ces moyens 15 sont deux arcs de cercle dont la section a une forme de crochet permettant de coincer le débordement 14. Les arcs de cercle entourent la paroi 12 à l'exception de deux petites zones diamétralement opposées, l'une des deux zones étant située sensiblement contre le côté 10.

Sur l'intérieur de sa paroi 12, le bouchon 11 porte un joint 13 en matière plastique souple.

La deuxième zone de face intérieure du couvercle 3, dont le niveau est légèrement au dessus de celui de la première zone, s'étend sensiblement à partir du bouchon jusqu'au côté 16 opposé au côté 10.

Cette zone est rectangulaire et comprend un miroir 17 rectangulaire dont les dimensions sont légèrement inférieures à celles de l'autre zone de face intérieure. Le miroir 17 est fixé à la face par tout moyen qui convient, notamment par encliquetage ou par collage.

Lorsque le conteneur 1 est en position fermée, le miroir 17 est situé en regard de l'évidement 6.

Entre le miroir 17 et le côté 16, la face intérieure comprend en saillie une langue 18 rectangulaire dont les dimensions correspondent à celles du fermoir 5. La langue 18 est destinée à venir s'insérer dans le fermoir 5 lorsque le conteneur 1 est en position fermée. La langue 18 présente ainsi sur son extrémité la plus éloignée de la face intérieure du couvercle 3 un petit décrochement formant moyens d'encliquetage dans le fermoir 5.

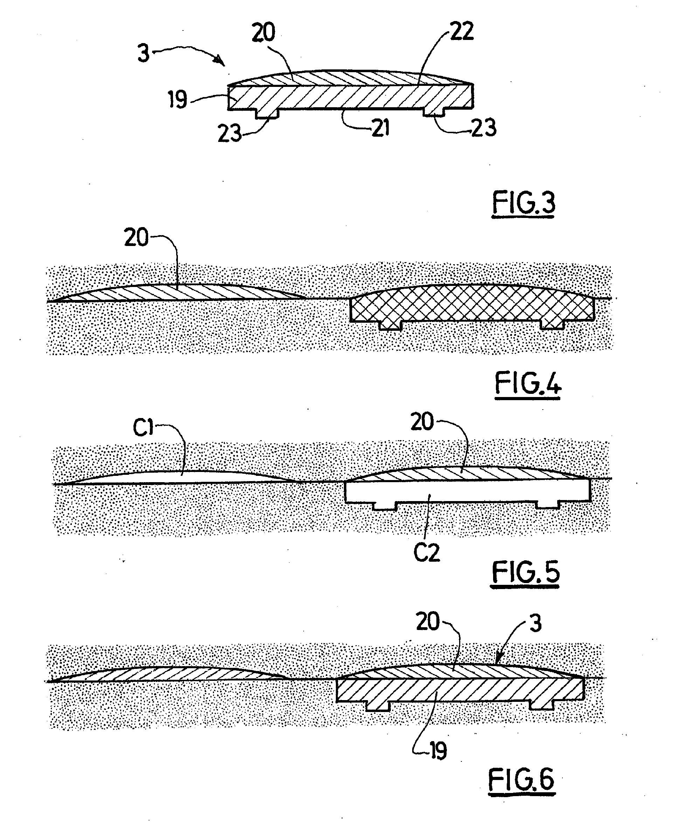

En référence à la figure 3, on décrit maintenant plus spécifiquement la structure interne du couvercle 3.

La section du couvercle 3 a été représentée de façon très schématisée.

Le couvercle 3 dépourvu des pièces additionnelles que sont le bouchon 11 et le miroir 17 est une pièce en matière plastique rigide comprenant une partie de base 19 et deuxième partie 20.

La deuxième partie 20 correspond à une couche additionnelle recouvrant de façon fixe la partie de base 19 qui porte les éléments de structure du couvercle 3 tels que le bouchon 11, le miroir 17, la langue 18. La deuxième partie 20 surmonte la partie de base 19 et sa deuxième face se confond avec la face extérieure du couvercle 3.

En section selon des plans parallèles aux côtés 10, 16, la partie de base 19 présente une forme rectangulaire. Le long d'un premier bord 22, en longueur, la partie de base 19 est adjacente à la deuxième partie 20. Le bord opposé 21 présente deux saillies rectangulaires 23 vers l'extérieur situées chacune vers une extrémité du côté 21. Ces rectangles saillants 23 sont de petite taille par rapport aux dimensions de la partie de base 19. Ils correspondent à une section de nervure sur la première face de la partie de base 19 et donc du couvercle 3, il s'agit par exemple de la section des moyens de fixation 15 circulaires du bouchon 11.

La distribution des éléments répartis dans la matière est plus dense dans ces nervures ainsi que dans les zones de la partie de base 19 situées au droit des saillies 23 jusqu'au côté 22.

Visuellement, ceci se traduit par un aspect visuel différent de la matière sur le côté 22 au droit des nervures. Au droit des moyens de fixation 15, on peut voir sur la deuxième face de la partie 20, la trace de ces moyens 15.

La deuxième partie 20 présente une section en forme de section de disque, très aplatie. En volume, cela correspond à une couche légèrement bombée.

L'un des deux bords est destiné à venir en contact contre le bord 22 de la partie de base 20.

Lorsque la partie de base 19 et la deuxième partie 20 sont fixées rigidement l'une à l'autre, la partie 20 recouvre complètement la deuxième face de la partie de base 19.

On décrit maintenant le mode de réalisation du couvercle 3.

En référence aux figures 4, 5, 6, le moule comprend deux parties supérieure et inférieure. Les deux parois du moule en vis-à-vis forment deux cavités : une première cavité C1 de la forme de la partie 20 et une cavité C2 de la forme de la pièce complète.

On injecte la matière plastique dans la cavité C1. On laisse la partie 20 se solidifier. Parallèlement, on injecte la matière plastique fluidifiée dans la cavité C2. On laisse la matière plastique se solidifier. (figure 4)

On obtient alors une deuxième partie (20) et une pièce complète - une pièce perdue - comprenant des zones d'ombre 23 sur la face supérieure.

On ouvre le moule et on retire les deux produits obtenus de leurs cavités respectives. On jette la pièce perdue et l'on place la partie 20 dans la partie de cavité C2 correspondant à ladite partie 20. (figure 5)

On injecte la matière plastique dans la cavité C1 pour former une nouvelle partie 20 et parallèlement dans la cavité C2. Ceci permet de surmouler la partie 19 sur la partie 20. (figure 6)

Le polymère chaud de la partie 19 se soude à la partie 20 sans changer l'aspect du côté visible de la partie 20.

Les temps de refroidissement sont choisis pour permettre une fixation optimale de la deuxième partie 20 à la partie de base 19.

Dans une réalisation, on peut fixer les parties 19, 20 par d'autres moyens tels que par collage.

Pour fabriquer le couvercle 3 complet, il convient ensuite de fixer le miroir 17 selon le moyen choisi et le bouchon 11 par encliquetage.

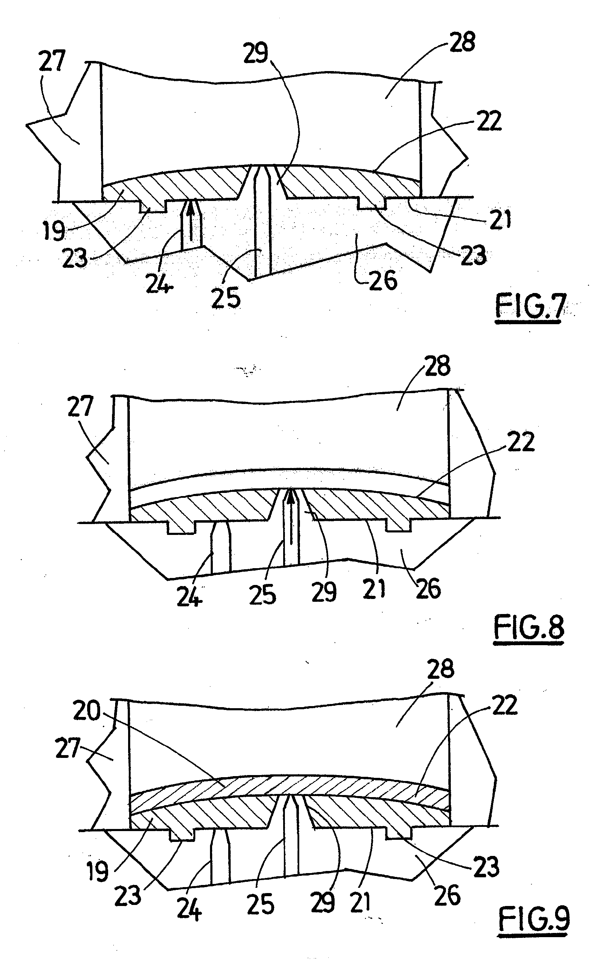

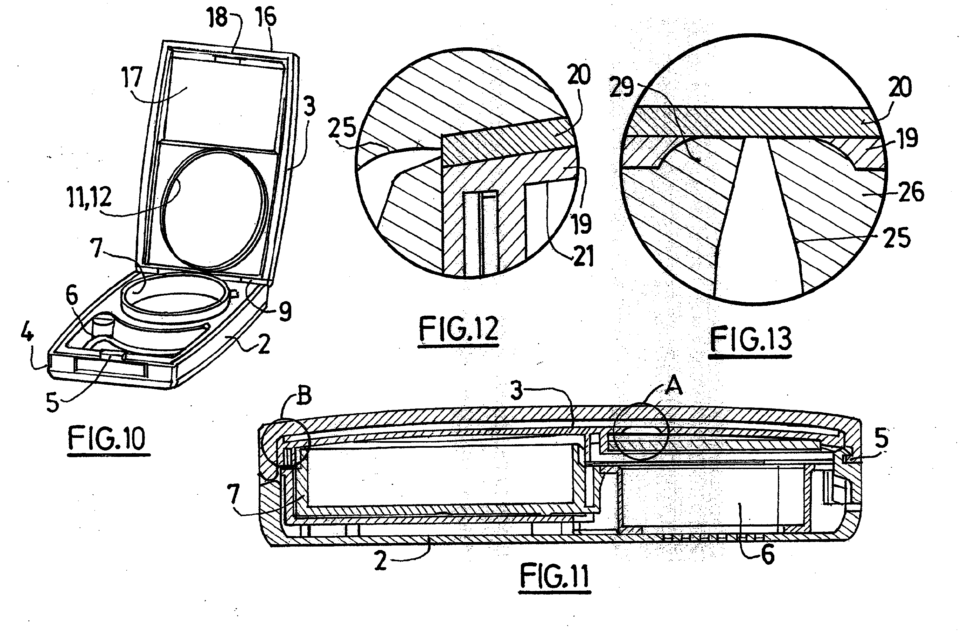

Selon le mode de réalisation représenté sur les figures 7 à 13, on moule la pièce en deux parties 19, 20 dans un moule commun.

L'appareillage d'injection comprend au moins deux points d'injection 24, 25 de matière plastique, une partie de moule formant socle 26, une partie de moule latérale 27 et une partie de moule mobile 28 en translation.

Le socle 26 présente en section la forme correspondant au côté 21 de la partie de base 19.

Un premier point d'injection 24 traverse le socle 26 et permet l'injection de matière plastique pour former la partie 19.

Le socle 26 peut présenter une saillie 29 dont la hauteur correspond à l'épaisseur de la partie 19. Cette saillie 29 comprend le deuxième point d'injection 25 destinée à l'injection de matière plastique pour former la partie 20.

En conséquence, la partie 19 comprend un trou correspondant à la saillie 29. Ce trou peut être masqué par le fond 13 du bouchon 11.

La partie de moule mobile 28 est déplaçable entre une première position dans laquelle elle est en contact avec la saillie 29 et une deuxième position dans laquelle elle est écartée de cette saillie 29.

En variante, la partie de moule mobile 28 est déplaçable entre une première position, dans laquelle elle est écartée du socle 26 d'une distance correspondant à l'épaisseur souhaitée de la partie de base 19, et une deuxième position dans laquelle elle est écartée du socle 26 depuis sa première position d'une distance correspondant à l'épaisseur souhaitée de la deuxième partie 20. Le deuxième point d'injection 25 est alors agencé latéralement par rapport à l'espace formé entre la première et la deuxième position.

Cette variante permet d'obtenir une partie de base 19 ne présentant pas de trou traversant.

La partie de moule mobile 28 permet le moulage de la deuxième face de la partie 19.

La deuxième face de la partie 19 et la première face de la partie 20 ont dans ce mode de réalisation une section en forme d'arc de cercle qui est la même que celle de la deuxième face de la partie 20.

Selon ce mode de réalisation, on place la partie de moule 28 dans la première position, et on injecte la matière plastique.

Après un temps de refroidissement choisi pour permettre une fixation optimale des parties 19, 20, on déplace la partie de moule 28 dans sa deuxième position.

On injecte la matière plastique pour former la partie 20. Après refroidissement, on retire la pièce formée des parties 19, 20 pour terminer la fabrication du couvercle 3. On replace la partie de moule 28 dans la première position.

Une fois la pièce réalisée, le couvercle est obtenu en ajoutant le bouchon 11 et le miroir 17.

Ensuite, le corps 2 et le couvercle 3 sont articulés l'un à l'autre. On obtient alors le conteneur prêt à être rempli 1.

Vient ensuite l'étape de remplissage du godet 7 dans laquelle on coule le produit à conditionner dans le godet 7.

On obtient alors le conteneur prêt à être utilisé.

On a décrit le procédé selon l'invention appliqué à la fabrication d'un couvercle d'un conteneur pour le conditionnement d'un produit cosmétique. L'invention ne se limite pas au conteneur décrit, elle peut être appliquée à des conteneurs différents, en taille, en structure...

Plus généralement, l'invention ayant pour but de résoudre le problème des zones d'ombre sur des pièces en matière plastique, l'invention s'applique à tout objet en plastique pour lequel ce problème se pose.

## Revendications

1. Procédé de réalisation d'une pièce (3) rigide en matière plastique comprenant une distribution d'éléments répartis dans la matière, comprenant une partie de base (19) rigide, **caractérisé par le fait que** :
- on injecte de la matière plastique afin de mouler la partie de base (19) comprenant au moins une saillie (23) sur une première face, et une deuxième face lisse,
- on injecte la matière plastique afin de mouler une deuxième partie de pièce (20), la deuxième partie (20) ayant une première face complémentaire de la deuxième face de la partie de base (19) et une deuxième face formant la face extérieure de la pièce (3) ;
- on associe rigidement la partie de base (19) et la deuxième partie (20), la deuxième face de la partie de base (19) étant au contact de la première face de la deuxième partie (20).

2. Procédé selon la revendication 1, **caractérisé en ce que**
- on moule la deuxième partie (20) dans une première cavité C1 de forme correspondant à celle de la deuxième partie (20) ;
- on place la deuxième partie (20) dans une deuxième cavité de forme correspondant à celle de la pièce (3) ; et
- on surmoule la partie de base 19 sur la deuxième partie (20).

3. Procédé selon la revendication 1, **caractérisé en ce que**
- on injecte de la matière plastique dans un moule par l'intermédiaire d'un premier point d'injection (24) afin de mouler la partie de base (19), la forme de la deuxième face de la partie de base (19) étant obtenue grâce à une partie de moule mobile (28), la partie de moule mobile (28) étant déplaçable selon une direction entre deux positions, une première position de moulage de la partie de base (19) et une deuxième position de moulage de la deuxième partie (20) ;
- on déplace la partie de moule mobile (28) de sa première position à sa deuxième position en l'écartant de la deuxième face de la partie de base (19) pour créer un espace vide ;
- on injecte de la matière plastique par l'intermédiaire d'un deuxième point d'injection (25) dans l'espace vide afin d'obtenir la deuxième partie (20).

4. Procédé selon la revendication 3, **caractérisé en ce qu'**un trou traversant est ménagé dans la partie de base (19) lors du moulage de la partie de base, la matière plastique étant injectée dans l'espace vide au travers du trou traversant.

5. Procédé selon la revendication 3, **caractérisé en ce que** le deuxième point d'injection (25) est agencé latéralement par rapport l'espace vide.

6. Procédé selon l'une quelconque des revendications 3 à 5, **caractérisé en ce qu'**il comprend en outre les étapes consistant à :
- retirer la pièce (3) formée par la partie de base (19) et la deuxième partie (20) ;
- déplacer la partie de moule mobile (28) de sa deuxième position à sa première position.

7. Pièce (3), notamment de conteneur destiné à contenir un produit cosmétique, en matière plastique comprenant une distribution d'éléments répartis dans la matière comprenant une partie de base (19) comprenant au moins une saillie (23) sur une première face et une deuxième face lisse, **caractérisé en ce que** la pièce (3) comprend une deuxième partie (20), la deuxième partie (20) ayant une première face complémentaire de la deuxième face de la partie de base (19) et une deuxième face formant la face extérieure de la pièce (3), la partie de base (20) et la deuxième partie (19) étant rigidement fixées l'une à l'autre, la deuxième face de la partie de base (20) étant au contact de la première face de la deuxième partie (19).

8. Pièce (3) selon la revendication 7, **caractérisé en ce qu'**il comprend en outre un miroir (17), des moyens formant bouchon (11) de godet et une langue (18) rigide en saillie destiné à s'insérer dans un fermoir (5) correspondant.

9. Conteneur prêt à être rempli (1) d'un produit notamment cosmétique, comprenant au moins :
- un corps de base (2) comprenant sur une face intérieure un godet (7) destiné à être rempli de produit cosmétique ;
- une pièce (3) articulée au corps de base (2) par des moyens formant charnière le long d'un côté commun, la pièce (3) étant mobile par rapport au corps de base (2) entre deux positions, une position de fermeture dans laquelle la pièce (3) recouvre la face intérieure du corps de base (2) et une position d'ouverture dans laquelle la pièce (3) et le corps (2) ont une zone de contact limitée aux moyens formant charnière et dans laquelle le godet (7) est accessible,
le conteneur étant **caractérisé en ce que** la pièce (3) est conforme à l'une des revendications 7 ou 8.

10. Procédé de fabrication d'un conteneur (1) prêt à être rempli selon la revendication 9, **caractérisé en ce qu'**il comprend les étapes suivantes :
- on se procure une pièce (3) selon la revendication 8 ;
- on se procure un corps de base (2) comprenant sur une face intérieure un godet (7) destiné à être rempli de produit cosmétique ;
- on associe la pièce (3) et le corps de base à l'aide de moyens formant charnière le long d'un côté commun de la pièce (3) et du corps de base (2).

11. Conteneur pour un produit notamment cosmétique comprenant au moins un corps de base (2) rempli de produit et une pièce (3) articulée au corps de base (2) par des moyens formant charnière le long d'un côté commun, la pièce (3) étant mobile par rapport au corps de base (2) entre deux positions, une position de fermeture dans laquelle la pièce (3) recouvre la face intérieure du corps de base (2) et une position d'ouverture dans laquelle la pièce (3) et le corps (2) ont une zone de contact limitée aux moyens formant charnière et dans laquelle le godet (7) est accessible, **caractérisé en ce que** la pièce est conforme à la revendication 8 et que le godet est rempli de produit notamment cosmétique.

12. Procédé de fabrication d'un conteneur contenant un produit cosmétique selon la revendication 11, **caractérisé en ce qu'**il comprend les étapes suivantes :
- on se procure un conteneur prêt à être rempli selon la revendication 10 ;
- on coule le produit cosmétique dans le godet (7) ;
- on place la pièce (3) de conteneur dans sa position de fermeture.
